# EUROPEAN PATENT SPECIFICATION

(11) **EP 3 356 483 B1**
(45) Date of publication and mention of the grant of the patent: **13.03.2019**
(21) Application number: 16765991.1
(22) Date of filing: 15.09.2016
(51) Int. Cl.: C09H 5/00, A23L 29/281, A23L 23/00, A23L 23/10

(54) **FOOD CONCENTRATE IN THE FORM OF A GEL**
LEBENSMITTELKONZENTRAT IN GELFORM
CONCENTRÉ ALIMENTAIRE SOUS FORME DE GEL

(30) Priority: 30.09.2015 EP 15187710
(43) Date of publication of application: 08.08.2018
(73) Proprietor: UNILEVER N.V., 3013 AL Rotterdam (NL); Unilever PLC, London, Greater London EC4Y 0DY (GB)
(72) Inventor: LEMMERS, Marc, 3133 AT Vlaardingen (NL); MELLEMA, Michel, 3133 AT Vlaardingen (NL); MELWITZ, Dieter, Werner, 74074 Heilbronn (DE); SCHMID, Hermann, 74074 Heilbronn (DE)
(74) Representative: Tjon, Hon Kong Guno
(86) International application number: PCT/EP2016/071755
(87) International publication number: WO 2017/055090

(56) References cited:
- EP-A2- 0 494 417
- WO-A1-2007/068402
- DE-A1-102006 033 187
- US-A- 3 930 052
- NAFTALIN R J ET AL: "The mechanism of sugar-dependent stabilisation of gelatin gels", BIOCHIMICA ET BIOPHYSICA ACTA (BBA) - BIOMEMBRANES, ELSEVIER, AMSTERDAM, NL, vol. 352, no. 1, 30 May 1974 (1974-05-30), pages 173-178, XP023352511, ISSN: 0005-2736, DOI: 10.1016/0005-2736(74)90188-6 [retrieved on 1974-05-30]
- KUNIHIKO GEKKO ET AL: "EFFECTS OF POLYOLS AND SUGARS ON THE SOL-GEL TRANSITION OF GELATIN", BIOSCIENCE BIOTECHNOLOGY BIOCHEMISTRY, JAPAN SOCIETY FOR BIOSCIENCE, BIOTECHNOLOGY, AND AGROCHEMISTRY, TOKYO, JAPAN, vol. 56, no. 8, 1 August 1992 (1992-08-01) , pages 1279-1284, XP000309847, ISSN: 0916-8451
- HOLM K ET AL: "Sweetness and texture perceptions in structured gelatin gels with embedded sugar rich domains", FOOD HYDROCOLLOIDS, ELSEVIER BV, NL, vol. 23, no. 8, 1 December 2009 (2009-12-01), pages 2388-2393, XP026603143, ISSN: 0268-005X, DOI: 10.1016/J.FOODHYD.2009.06.016 [retrieved on 2009-06-28]
- Anonymous: "Die ganze Kraft des Wassers auf einen Blick", , 13 December 2012 (2012-12-13), pages 1-1, XP002762649, Retrieved from the Internet: URL:http://web.archive.org/web/20121213011 855/http://www.bwb.de/content/language1/ht ml/1133.php [retrieved on 2016-10-06]

## Description

### Field of the invention

The present invention relates to savoury food concentrates, products designed to provide a ready-to-eat food product after dilution into a larger volume of food like an aqueous phase or dish under application of heat.

### Background of the invention

Food concentrates are usually defined as food products that need to be mixed with an aqueous phase like water or mixed into a dish under application of heat before consumption such that the concentrate is diluted into a larger volume of food. In this context the term dilution is understood to include dissolution, dispersion and dissolving and used interchangeably. The term dilution is used to characterise that the concentrate needs to be diluted into a larger volume of food to bring the high concentration of taste ingredients to a consumable level. Perhaps one of the most iconic concentrates is the bouillon cube. It is a dry product prepared by pressing dry ingredients or extruding a mixture of dry ingredients and fat. WO0868138 discloses a bouillon cube with 49.4wt% salt, 11.9wt% monosodium glutamate, 12% vegetable hydrogenated fat, 2,4wt% sugar, 13.7wt% starch, spices and herbs. Yeast extract is often included and depending on the desired flavour, beef extract, chicken meat powder and aromas. To prepare a bouillon, a bouillon cube is usually diluted with hot water in a ratio of 1 to 50 (10g of bouillon cube with 500ml of water). To season a dish like a stew or a pasta sauce, a bouillon cube is often diluted into the dish during the preparation. In Western-European countries a ready-to-eat bouillon typically contains about 0.8wt% salt.

There has been a demand for savoury food concentrates in other formats than dry. One format is that of paste. WO 2002/089608 discloses a pasty concentrated sauce base comprising 8wt% gelatine, 15% dextrose and 17.5wt% salt (all by weight of the total amount of water). Because gelatine is added at the start, the gelatine is hydrolysed during the process, to contribute to the organoleptic profile of the product.

Concentrates in the form of gels could also be desirable. However, the inherent high level of salt in such concentrates interferes with the gelling action of many gelling agents. In addition, not all gel structures known in the food industry are appropriate. For example, gelled food products that are ready-to-eat like imitation cheese need not dissolve in hot water but may be formulated to be sliceable. In contrast, preferred food concentrates have a good dissolution speed, lack of undesirable phase separation but also sufficient gel strength so that it can be removed in one piece from the packaging.

EP1962619 discloses a gelled food concentrate based on xanthan and locust bean gum (LBG) which can be used like bouillon cubes by dilution with hot water or into a dish to season the latter. The advantage is that the gelled food concentrates allow the inclusion of fresh herbs with better taste and flavour. Gelled food concentrates like those in EP1962619 have been a remarkable commercial success. Still there is a need for improved food concentrates in gelled form. Increasingly consumers avoid ingredients perceived as unnatural like xanthan and LBG,

WO 2007/068402 describes concentrates with the appearance of a gel and states that using gelatine only such concentrates with high amounts of salt were not possible. Instead, starch had to be added. Example 1 thereof discloses a composition with 16.4 wt% gelatine, 4.5wt.% potato starch, 8 wt% of sugar (all by weight of the total amount of water). The viscosity of the product is relatively high before it is filled into containers where it is allowed to gel. The increased viscosity poses higher requirements to the pumps used in the production. In addition, the dissolution speed could be improved. However, without starch the composition with only gelatine produced a phase separated product. In addition, concentrates may show undesirable discoloration after months of storage. Surprisingly, it has now been found that improved concentrates can be provided according to the present invention.

### Summary of the invention

Surprisingly, it has now been found improved food concentrates can be provided whereby said a food concentrate in the form of a gel comprises
a) 40 to 75 wt% of water by weight of the total food concentrate;
b) Preferably at least 20 wt% NaCl by weight of the total water content of the food concentrate calculated as (weight of NaCl/(weight of NaCl+weight of total water content))*100%;
c) 5.0 to 6.0 mmol/g water of the combined amount of sodium- and potassium-ions, preferably the ratio (w/w) of sodium to potassium- ions is at least 1;
d) a binary gelling system said binary gelling system comprising
   i 4 to 13 wt% of type A gelatine by weight of the total water content of the food concentrate - calculated as (weight of gelatine /(weight of gelatine+weight of total water content))*100%;
   ii 9 to 35 wt% of sugar by weight of the total water content of the food concentrate said sugar selected from the group of sucrose, glucose, fructose and mixtures thereof - calculated as (weight of sugar /(weight of sugar+weight of total water content))*100%,
   iii Whereby the combined amount of gelatine and sugar is at least 20wt%, by weight of the total water content of the food concentrate and
e) Preferably less than 0.1 wt% gelatinized starch by weight of the total food concentrate.

The invention is further described in more detail below.

### Detailed description of the invention

### Gelatinised starch

Unexpectedly it was found that improved food concentrates in the form of a gel e.g. without undesirable discoloration after storage could be provided using a binary gelling system comprising gelatine and certain sugars without the need to use gelatinised starch. Accordingly, the food concentrate according to the present invention can be prepared in absence of an effective amount of gelatinised starch. An effective amount in this case is defined as an amount of gelatinised starch that would cause the concentrate to have the form of a gel. Preferably, the food concentrate according to the present invention comprises less than 0.1 wt%, preferably 0 wt% of gelatinised starch by weight of the total food concentrate. Non-gelatinised starch may be present.

Another advantage of the present invention is that no other gelling gums are needed like xanthan, glucomannan, galactomannan and mixtures thereof. Accordingly, the food concentrate according to the present invention can be prepared in absence of an effective amount of gelling gum like xanthan, glucomannan, galactomannan and mixtures thereof. An effective amount in this case is defined as an amount that would cause the concentrate to have the form of a gel. Preferably, the food concentrate according to the present invention comprises less than 0.05 wt%, preferably 0 wt% gelling gum by weight of the total food concentrate.

### Binary gelling system

As demonstrated by the examples below, the food concentrates in the form of a gel showed good dissolution while being easy to process and avoid undesirable discoloration upon prolonged storage. In addition, the binary gelling system is relatively cost-effective using low levels of gelatine and certain sugars while the prior art often needs more complex gelling systems. The food concentrates according to the invention preferably comprise a binary gelling system comprising gelatine and certain sugars in the amounts described below. Unexpectedly, it was found that the combination of certain sugars and gelatine in specific amounts resulted in an improved food concentrate. The combined amount of gelatine and sugar as defined below is preferably at least 20wt%, more preferably at least 24wt% and preferably at most 48wt%, more preferably at most 43 wt%, more preferably at most 35wt% by weight of the total.

### Gelatine

The first component of the binary gelling system is gelatine, preferably of type A. The amount and type of gelatine used in the inventive food concentrate is such that the concentrate has the form of a gel. The inventive food concentrate comprises at least 4 wt%, preferably at least 6 wt% and at most 13 wt%, preferably at most 10wt% of gelatine by weight of the total water content of the food concentrate. These are calculated as (weight of gelatine / (weight of gelatine+weight of total water content))*100%. Surprisingly it was found that food concentrates with gelatine of type A gave improved results. The gelling effect of gelatine is usually denoted by the bloom strength. The higher the bloom strength the more efficient the gelling power. Preferably the bloom strength is at least 175 and at most 300. As any skilled person in the art will know that if a gelatine is used with a lower bloom strength more is needed compared to a gelatine with a higher bloom strength. A particular preferred gelatine is pork gelatine. No other gelling agents are needed to form the gel structure of the inventive food concentrate. Preferably the food concentrate comprises 0 to 0.1 wt% of gelling agents other than gelatine forming the gel structure of the food concentrate. The advantage is that more simple formulations are possible.

### Sugar

While sugar is not a gelling agent certain sugars are the second component of the binary gelling system as gelling promoting agent. The inventive food concentrate comprises at least 9 wt%, more preferably at least 10wt%, even more preferably at least 12 wt%, preferably at least 17 wt% and preferably at most 35 wt%, preferably at most 30 wt% of sugar by weight of the total water content of the food concentrate, said sugar selected from the group of sucrose, glucose, fructose and mixtures thereof. These are calculated as (weight of sugar / (weight of sugar+weight of total water content))*100%. Surprisingly it was found that if the sugar is selected from sucrose, glucose, fructose and mixtures thereof, undesirable discoloration could be avoided during storage.

### Gel

The concentrate according to the invention has the form of a gel. To distinguish a gel from a paste, one may use the material property that gels and pastes respond differently to applied deformations. When deformed, a paste will usually show an irreversible deformation, whereas as gel, when deformed such that the gel does not break, will show a reversible deformation. That is, a gel can store the energy of the deformation, in order to release it again to make the deformation undone. In case of a paste, the energy of the deformation will dissipate, making the deformation permanent.

To characterise a gel preferably the following test is carried out using a Texture Analyzer from Stable Micro Systems, using the installed measuring protocol of a relaxation test' in the Expert Analyzer software menu.

| | |
|---|---|
| Machine: | TA XT2 from Stable Micro Systems |
| Applied load cell: | 500 g |
| Method: | Relaxation test TA Expert analyzer |
| Software version: | 6.1.5.0 |
| Probe: | ½ inch diameter cylindrical Delrin probe, plastics material, 35 mm length |
| Data acquisition rate: | 10 points per second |

Settings TA expert analyzer:

| | |
|---|---|
| Pretest speed | 0.50 mm/s |
| Test speed | 0.25 mm/s |
| Post test speed | 10 mm/s |
| Force | 10 g |
| Time | 300 s |
| Trigger | auto (force) |
| Trigger Force | 0.1 g |
| Trigger distance | 35 mm |
| Proportional Gain | 20 |
| Integral Gain | 5 |
| Differential Gain | 5 |
| Max track speed | 5 mm/sec |

With these settings, the probe presses the sample until a force of 10 g is reached. It then keeps the force at 10 g for 300 seconds, after which the probe retracts from the sample. Measurements are performed at room temperature (defined as 20 °C in the present application) in polypropylene cups with the following dimensions:

| | |
|---|---|
| • bottom diameter: | 4.9 cm |
| • top diameter: | 5.2 cm |
| • height of the container: | 6.3 cm |

The filling height of the cups should be at least 50 mm. The measurement is carried out after storing the samples 4 weeks at room temperature.

For the purpose of the present invention we define a food concentrate as a gel if under the conditions as specified above the probe moves in the sample less than 5 mm after reaching a resistance force of 10 g over a timescale of 300 s. Products according to the present invention may have one or two layers of gels. Single layer concentrates are preferred. Preferably the sample can be removed from its polypropylene packaging in one piece after four weeks of storage at room temperature.

The absence/presence of syneresis is also determined after storing the samples 4 weeks at room temperature in the cups described above. The amount of syneresis in the inventive concentrates is negligible. Preferably, syneresis is defined as negligible if the amount of liquid which can be poured in 10 s from a concentrate filled in the cup described above after 4 weeks of storage at room temperature is less than 10 wt% or preferably less than 5 wt% by weight of the total food concentrate.

For the purpose of the present invention we define a food concentrate as a paste when under the conditions as specified the probe moves in the sample more than 5 mm after reaching a resistance force of 10 g over a timescale of 300 s, or when the resistance force of 10 g cannot be reached within the first 30 mm after starting sample penetration with the probe.

Method to determine the firmness of a gelled food concentrate:
The firmness or gel strength may be measured using a Texture Analyzer from Stable Micro Systems, model TA XT2, operating a 30 kg load cell, to measure the firmer gels, or a 500g load cell, to measure the weaker gels. A plunger is mounted with the following characteristics:

| | |
|---|---|
| • diameter | ½ inch diameter cylindrical Delrin probe, plastics material |
| • height | 35 mm |
| • flat bottom and wall surface, sharp edges, plastics material | |

For optimal reproducibility, the sample should always be measured in the same type of container, i.e. the container should always be of the same dimensions, to minimize potential wall effects. In this analysis, plastic (PP) containers are used with the following dimensions:

| | |
|---|---|
| • bottom diameter: | 4.9 cm |
| • top diameter: | 5.2 cm |
| • height of the container: | 6.3 cm |

The applied filling height is 5 cm.
Measurements are done 4 weeks after preparation of the samples which are stored at room temperature. The TA-parameter measurement settings are:

| | |
|---|---|
| • Pre test speed: | 1 mm/s |
| • Test speed: | 0.5 mm/s |
| • Return speed: | 10 mm/s |
| • Target distance: | 15 mm |
| • Trigger force (auto): | 0.5 g (only with 30 kg load cell) |

Data recording is stopped at target. The shown force values (in grams) are taken from the recorded graph at 10 mm penetration depth. In case of using the 500 g load cell the automated trigger force is switched off. The value of the firmness at 10 mm penetration depth is then manually obtained from the generated data.

For the purpose of the present invention it is preferred that the gelled food concentrate has a firmness of at least 5 g, preferably at least 10 g and even more preferably at least 15 g, measured at a penetration depth of 10 mm, as described in the method above. It is also preferred that the gelled food concentrate has a firmness that is below 1000 g, preferable below 500 g, even more preferable below 200 g, at a penetration depth of 10 mm, as described by the method above.

### Water

The food concentrate may contain any amount of water, preferably the water content is at least 40 wt%, more preferably at least 45 wt% and preferably at most 75 wt% more preferably at most 70 wt% of water by weight of the total food concentrate. To avoid any doubt these ranges refer to the total water content of the food concentrate since water may be added as such or are as part of another ingredient. For example when fresh or frozen vegetables are used in the food concentrate these contain water which will be part of the total water content of the food concentrate. For the purpose of the present invention, some ingredients like NaCl, gelatine and sugar are expressed as wt% by weight of the total water content of the food concentrate. These are calculated for example in the case of NaCl as (weight of NaCl / (weight of NaCl+weight of total water content))*100%.

### Salt

The food concentrate of the present invention comprises an effective amount of salt. The effective amount is inter alia determined by the dilution factor and the desired level of NaCl in the ready-to-eat product. Preferably, the present invention comprises at least 20 wt% of NaCl, preferably at least 21 wt%, more preferably at least 22 wt% by weight of the total water content of the food concentrate. The NaCl used will be the most predominant source of sodium ions. Other ingredients may also contribute sodium ions. Surprisingly, it was found that it was advantageous to have a preferred amount of sodium-ions and potassium-ions in the inventive food concentrate. Preferably the food concentrate according to the invention comprises 5.0 to 6.0 mmol/g water of the combined amount of sodium- and potassium-ions, preferably the ratio (w/w) of sodium to potassium ions is at least 1, more preferably at least 5, even more preferably at least 8.

### Savoury taste booster

The food concentrate is preferably a food concentrate for preparing a bouillon, a soup, a sauce, a gravy or a dish. To contribute to the savoury taste, the food concentrate of the present invention may further comprise a savoury taste booster, preferably selected from the group consisting of glutamate, 5'-ribonucleotides, lactic acid, citric acid and mixtures thereof. The term savoury taste booster used in the singular may refer to a single compound or a mixture of more than one taste booster compounds. The amount of savoury taste booster present in the food concentrate is present in an effective amount to obtain the desired level in the ready-to-eat product. The effective amount depends on the desired dilution rate and amount in the ready-to-eat product. The amount of savoury taste booster in the concentrate is preferably present in an amount of at most 20 wt%, more preferably of at most 15 wt%, more preferably in an amount at most 10 wt%, and preferably at least 0.1 wt%, more preferably at least 0.5 wt%, more preferably at least 1 wt% based on the weight of the total food concentrate. It is understood that any savoury taste booster compound can be added as such or as part of more complex food ingredients like yeast extract; hydrolyzed proteins of vegetables-, soy-, fish-, or meat-origin, malt extract, beef flavourings, onion flavouring, liquid or dissolvable extracts or concentrates selected from the group consisting of meat, fish, crustaceans, herbs, fruit, vegetable and mixtures thereof. If monosodium glutamate is used, it is preferably used in an amount such that the amount of glutamate is at most 5 wt% by weight of the amount of water of the total food composition.

A food concentrate in the form of a gel according to the invention may comprise
a) 45 to 70 wt% of water by weight of the total food concentrate;
b) at least 22 wt% NaCl by weight of the total water content of the food concentrate calculated as (weight of NaCl/(weight of NaCl+weight of total water content))*100%;
c) 5.0 to 6.0 mmol/g water of the combined amount of sodium- and potassium-ions, whereby, the ratio (w/w) of sodium to potassium- ions is at least 1 more preferably at least 5, even more preferably at least 8;
d) a binary gelling system said binary gelling system comprising
   i 6 to 12 wt% of type A gelatine by weight of the total water content of the food concentrate - calculated as (weight of gelatine /(weight of gelatine+weight of total water content))*100%;
   ii 9 to 30 wt% of sugar by weight of the total water content of the food concentrate said sugar selected from the group of sucrose, glucose, fructose and mixtures thereof - calculated as (weight of sugar /(weight of sugar+weight of total water content))*100%,
   iii Whereby the combined amount of gelatine and sugar is at least 20wt% and at most 35wt%, by weight of the total water content of the food concentrate and
e) less than 0.1 wt% gelatinized starch by weight of the total food concentrate.

### Process for preparing the inventive food concentrate

The food concentrate according to the present invention can be obtained by a process comprising the following steps:
a) Mixing all dry ingredients,
b) Admixing water to the mixture of dry ingredients,
c) Heating the mixture while stirring to completely dissolve all ingredients and to obtain a homogeneous mixture,
d) Optionally, pasteurizing said mixture,
e) Optionally, filling the mixture into a container and,
f) Allowing the mixture to form a gel.

To improve the dissolution of gelatine, prior to step a) a pre-mix may be made of gelatine, at least some of the water and optionally at least some of the sugar. The premix is then added before step c).

Preferably the salt is left out at step a), and added after the gelatine has been dissolved during step c).

If solid fats are used, like palm fat, beef fat, chicken fat, these are preferably added in molten form in step b. If other liquid ingredients are used like vegetable or meat extracts, these are preferably added in step b.

Preferably the temperature at step c) is high enough to dissolve the gelatine but not too high as to prevent loss of gelling capability of the gelatine. Preferably, the temperature at step c) is at least 40 °C, preferably at least 65 °C, preferably at least 70 °C and preferably at most 90 °C, preferably at most 80 °C.
Optionally water can be added after step c, to compensate for water loss by evaporation during the processing.

The present invention also provides a food concentrate obtainable by the process described.

### Use and process to prepare a ready-to-eat food product

The inventive food concentrate is typically used for preparing a ready-to-eat food product including a bouillon, soup or sauce. It may also be admixed into a dish like a stew, a Chinese style wok dish or a curry, under application of heat. In both types of use the concentrate is diluted into the larger volume of food to obtain the desirable ready-to-eat levels of e.g. the salt. For the purpose of the present invention it is understood that the term "dilution" is meant to include dissolution, dissolving, dispersion of the concentrate. When the concentrate is admixed to a dish it may melt during heating and form a sauce with the aqueous liquid present in the dish and optionally any added aqueous liquid.
A process to prepare the ready-to-eat food product comprises the steps of
a) providing a food concentrate according to the invention,
b) dilution of the food concentrate by mixing it into a larger volume of food to result in a mixture,
c) heating the mixture resulting from step b) to result in a ready-to-eat food product.

To prepare a ready-to-eat bouillon or soup, the larger volume of food will usually be an aqueous liquid like water. If the ready-to-eat food product is a dish an aqueous liquid will usually be part of the dish, e.g. the moisture present in a pasta or rice dish.

The present invention also provides the use of a food concentrate for preparing a ready-to-eat food product by dilution of the food concentrate by mixing it into a larger volume of food under application of heat. Preferably the dilution rate is at 20g/kg to 400g/kg of food. For example, for preparing a bouillon a dilution rate of 100g/kg corresponds the dilution of 20g of concentrate by mixing it with 200 ml of water under application of heat. For use in a dish assuming a serving size of 100g, a dilution rate of 100g/kg corresponds the dilution of 20g of concentrate by mixing it with 200g of dish under application of heat (20g per two servings of each 100g). The heating step is preferably carried out at a temperature of more than 60 °C, preferably more than 70 °C and preferably at most 100 °C.

### Examples

In the examples below the term "wt%(aq)" refers to the amount of an ingredient expressed as wt% by weight of the total water content of the food concentrate. This is calculated for example in the case of NaCl as (weight of NaCl / (weight of NaCl+weight of total water content))*100%.

Samples were stored at room temperature (20 °C) and evaluated after 4 weeks with respect to their gel forming capability and after 13 weeks with respect to signs of discoloration.

### Example 1 Comparative examples without gelatinised starch with gelatin A or B

The samples were prepared as follows using a Thermomix (Vorwerk):
a) Mix all dry ingredients until homogeneous
b) Melt the fat at 60 °C
c) Add the molten fat to the dry ingredients and mix until homogeneous
d) Add water and any other liquid ingredients, if applicable
e) Heat the mixture to 90 °C, while stirring (speed 7)
f) Keep at 90 °C for 3 minutes, while stirring (speed 7)
g) Hot-fill the mixture into containers followed by sealing the containers
h) Allowing the concentrate to set at room temperature

| **1** | | **Comparative** | | |
|---|---|---|---|---|
| | | **1a** | **1b** | **1c** |
| **Gelatine type A 250 Bloom** | wt%(aq) | 16.4 | - | - |
| **Gelatine type B 250 Bloom** | wt%(aq) | | 16.4 | 10.0 |
| **Salt** | wt%(aq) | 25.0 | 25.0 | 22.0 |
| **Gelatinized starch** | wt%(aq) | - | - | 0 |
| **Sugar** | wt%(aq) | 8.0 | 8.0 | 8.0 |
| **MSG** | wt%(aq) | 5.0 | 5.0 | 5.0 |
| **Fat** | wt% | 13.7 | 13.7 | 13.7 |
| **Pork meat powder** | wt%(aq) | 18.7 | 18.7 | 18.7 |
| **Pork flavour** | wt%(aq) | 2.5 | 2.5 | 2.5 |
| **Water** | wt% | 45.6 | 45.6 | 45.6 |
| | | | | |
| **Total sodium + potassium** | mmol/g water | 6.11 | 6.11 | 5.22 |
| **Gel (4 weeks)** | | No | No | No |

This example shows that without gelatinised starch it was not possible to prepare a concentrate in the form of a gel regardless of the type of gelatine used (type A or B) at 16.4 wt%(aq) and 10wt%(aq) (compositions 1a-c). Pork meat powder used was Scan Pro 1015 F.

### Example 2 Examples according to the invention vs comparative examples

These samples were prepared as described in example 1.

| **2** | | **Comparative** | | **Invention** | | **Comparative** |
|---|---|---|---|---|---|---|
| | | **2a** | **2c** | **2d** | **2e** | **2f** |
| **Gelatine type A 250 Bloom** | wt%(aq) | 10.0 | 10.0 | 10.0 | 10.0 | 16.4 |
| **Salt** | wt%(aq) | 22.0 | 25.0 | 25.0 | 22.0 | 20.1 |
| **Gelatinized starch** | wt%(aq) | 0 | 0 | 0 | 0 | 4.6 |
| **Sugar** | wt%(aq) | 8.0 | 15.0 | 15.0 | 15.0 | 8.0 |
| **MSG** | wt%(aq) | 5.0 | 5.0 | 0.0 | 5.0 | 5.0 |
| **Fat** | wt% | 13.7 | 13.7 | 13.7 | 13.7 | 13.7 |
| **Pork meat powder** | wt%(aq) | 18.7 | 18.7 | 18.7 | 18.7 | 18.7 |
| **Pork flavour** | wt%(aq) | 2.5 | 2.5 | 2.5 | 2.5 | 2.5 |
| **Water** | wt% | 45.6 | 45.6 | 45.6 | 45.6 | 45.6 |
| **Total sodium + potassium** | mmol/g water | 5.22 | 6.10 | 5.82 | 5.22 | 4.71 |
| **Gel (4 weeks)** | | no | no | yes | yes | yes |
| **Dissolution time (min)** | | - | - | 2 | 3 | 11 |
| **Processing viscosity at 1 s⁻¹(Pa.s)** | | - | - | 12 | 19 | 120 |

This example demonstrates that at low gelatine concentrations (10 wt%(aq)) in absence of gelatinsed starch it was not possible to prepare concentrates in the form of a gel. It was only possible provided that concurrently, the right type of gelatine was chosen, and the amount of sugar and gelatine was at least 20 and the combined amount of sodium- and potassium ions was between 5.0 and 6.0 mmol. Interestingly, the concentrates according to the invention showed a 6-fold lower processing viscosity compared to a concentrate with gelatinised starch (2f). Comparative example 2f is based on example 1d of WO 2007/068402 where gelatin is combined with gelatinized starch. The ratio (w/w) of sodium to potassium ions was at least 8 in the concentrates according to the invention.

Dissolution time of the samples in example 2 was measured in the following way. To a 1 L glass beaker, 500 ml water was added. A magnetic stirrer bar, rotating at 300 rpm, was used to make the water flow. The water is brought to the boil. Approximately 25 g of sample gel was introduced into the boiling water on a metal grid, which is suspended 3 cm above the bottom of the glass beaker, such that the magnetic stirrer bar can freely rotate on the bottom of the glass beaker. The dissolution of the gel is followed by measuring the conductivity as function of time. If the measured conductivity reaches a plateau value, we consider the gel as fully dissolved.

Processing viscosity of the mix before cooling down was measured using a standard rheometer (TA Instruments, AR2000ex). Cone and plate geometry was applied (40 mm cone diameter, angle of 2 degrees). A portion of warm sample was put on the preheated platform (60 °C). This sample was taken directly after mixing at elevated temperatures. A continuous shear rate ramp was applied from 0.1 s⁻¹ to 100 s⁻¹. Data sampling was set at 5 data points per shear rate decade. The total measurement took 1 minute to complete. The values given in table 2 are the viscosity values measured at a shear rate of 1 s⁻¹.

### Example 3. The effect of the presence and type of sugar

The compositions in the table below contained
- 12.5 wt%(aq) of gelatine type A (bloom strength 250, pork),
- 25 wt%(aq) NaCl,
- a combined amount of sodium- and potassium ions at a level of 5.7 mmol / g water.
- 10 wt%(aq) of the respective sugar, and
- the balance being water

The compositions were prepared as follows:
a) All dry ingredients except salt were mixed,
b) Water and, if any other liquid ingredients, were added to the dry raw material mix,
c) the mixture was heated to 70 °C while stirring, until the gelatine completely dissolved and a homogeneous mixture was obtained,
d) the salt was admixed, keeping the temperature around 70 °C, until a homogeneous mixture was obtained
e) water was added to compensate for the water lost by evaporation
f) the mixture was filled into containers
g) the concentrate was allowed to set at room temperature.

| **3** | **Invention/ Comparative** | **Sugar** | **[Gelatine] + [sugar] ≥ 20 wt% (aq)** | **Gel (4 weeks)** | **Discoloration (13 weeks)** |
|---|---|---|---|---|---|
| A | Comparative | - | No | no | No |
| B | Invention | Sucrose | Yes | yes | No |
| C | Invention | Glucose | Yes | yes | No |
| D | Invention | Fructose | Yes | yes | No |
| E | Comparative | Arabinose | Yes | yes | Yes |
| F | Comparative | Sorbose | Yes | yes | Yes |
| G | Comparative | Xylose | Yes | yes | Yes |
| H | Comparative | Ribose | Yes | yes | Yes |
| I | Comparative | Lactose | Yes | no | No |
| J | Comparative | Maltose | Yes | no | No |

From example 3 it becomes clear that only specific sugars sucrose, glucose and fructose provide a concentrate in the form of a gel whilst not discoloring the gels over time. The ratio (w/w) of sodium to potassium ions was at least 8 in the concentrates according to the invention.

### Example 4. Gelatine and Sucrose

The compositions in the table below contained
- gelatine type A (bloom strength 250, pork),
- sucrose,
- 25 wt%(aq) NaCl,
- a combined amount sodium- and potassium ions at a level of 5.7 mmol / g water.
- the balance being water.

The samples were prepared according to the method described in example 3.

| **4** | **Invention/ Comparative** | **[Gelatine]** *wt%(aq)* | **[Sucrose]** *wt%(aq)* | **[Gelatine] + [sugar] ≥ 20wt%(aq) ?** | **Gel (after4 weeks)** |
|---|---|---|---|---|---|
| A | Comparative | 4.5 | 0 | No | No |
| B | Invention | 4.5 | 20 | Yes | Yes |
| C | Comparative | 9 | 0 | No | No |
| D | Comparative | 9 | 5 | No | No |
| E | Invention | 9 | 11 | Yes | yes |
| F | Invention | 9 | 20 | Yes | yes |

No discoloration was observed in the compositions according to the invention. The ratio (w/w) of sodium to potassium ions was at least 8 in the concentrates according to the invention.

### Example 5 Gelatine and Glucose

The compositions in the table below contained
- gelatine type A (bloom strength 250, pork),
- glucose,
- 25 wt%(aq) NaCl,
- a combined amount sodium- and potassium ions at a level of 5.7 mmol / g water,
- the balance being water.

The samples were prepared according to the method described in example 3.

| **5** | **Invention/ Comparative** | **[Gelatine]** *wt%(aq)* | **[Glucose]** *wt%(aq)* | **[Gelatine] + [sugar] ≥ 20wt%(aq)** | **Gel (4 weeks)** |
|---|---|---|---|---|---|
| A | Comparative | 4.5 | 0 | No | no |
| B | Invention | 4.5 | 20 | Yes | yes |
| C | Comparative | 9 | 0 | No | no |
| D | Invention | 9 | 11 | Yes | yes |
| E | Invention | 9 | 20 | Yes | yes |

No discoloration was observed in the compositions according to the invention. The ratio (w/w) of sodium to potassium ions was at least 8 in the concentrates according to the invention.

### Example 6 Gelatine and Fructose

The compositions in the table below contained
- gelatine type A (bloom strength 250, pork),
- fructose,
- 25 wt%(aq) NaCl,
- a combined amount sodium- and potassium ions at a level of 5.7 mmol / g water, and
- the balance being water.

The samples were prepared according to the method described in example 3.

| **6** | **Invention/ Comparative** | **[Gelatine]** *wt%(aq)* | **[Fructose]** *wt%(aq)* | **[Gelatine] + [sugar] ≥ 20wt%(aq)** | **Gel (4 weeks)** |
|---|---|---|---|---|---|
| A | Comparative | 4.5 | 0 | No | no |
| B | Comparative | 9 | 0 | No | no |
| C | Invention | 9 | 15 | Yes | yes |

No discoloration was observed in the compositions according to the invention. The ratio (w/w) of sodium to potassium ions was at least 8 in the concentrates according to the invention.

### Example 7 Chicken bouillon concentrate

| Chicken bouillon concentrate | | | **Comp** | **Inv** |
|---|---|---|---|---|
| | | | **7a** | **7b** |
| Sucrose | | wt% | 0.91 | 0.89 |
| Fructose | | wt% | 0.00 | 2.91 |
| Chicken base | | wt% | 2.23 | 2.16 |
| Chicken flavor | | wt% | 1.47 | 1.43 |
| Yeast extract | | wt% | 1.28 | 1.24 |
| Chicken extract | | wt% | 36.56 | 35.50 |
| Carrot juice cooked | | wt% | 1.68 | 1.63 |
| Celery juice cooked | | wt% | 2.52 | 2.45 |
| Onion juice cooked | | wt% | 3.69 | 3.59 |
| Water | | wt% | 26.04 | 25.28 |
| Salt | | wt% | 14.24 | 13.82 |
| Gelatine Pork Type A 250 bloom | | wt% | 9.37 | 9.10 |
| **Total** | | wt% | **100.00** | **100.00** |
| | | | | |
| Total sodium **+** potassium concentration | | mmol / g water | 5.09 | 5.09 |
| Final concentration of claimed sugars | | wt%(aq) | 5.7% | 10.1% |
| Gelatin concentration | | wt%(aq) | 12.0% | 12.0% |
| Sum gelatine + claimed sugars | | wt%(aq) | 17.7% | 22.0% |
| | | | | |
| Gel after 4 wks | | | no | yes |

Both samples 7a and 7b were stored at room temperature and evaluated after four weeks.
Samples prepared according to the formulation of example 7a were phase separated and it was not possible to evacuate these samples out of the packaging in one piece. Hence, concentrates prepared according to the formulation of example 7a were not further investigated for their textural properties.
Samples prepared according to the formulation of example 7b turned out to be single phase gel systems. The gels could be evacuated from their packaging in one piece. The gels had a wet and glossy appearance. The gel firmness was measured according to the protocol described in the text, and was found to be 17.2 ±0.3 g.
Four separate samples were prepared of the concentrate of example 7b and each was evaluated for its gel or pasty textural properties, according to the method described in the text. The results are given in table below.
Based on example 7 it is clear that a gelled chicken bouillon food concentrate using gelatine as single gelling agent can be prepared, at salt concentrations that would otherwise lead to products that cannot be evacuated from their packaging in one piece. The ratio (w/w) of sodium to potassium ions was at least 8 in the concentrate according to the invention.

| **Example 7b** | **Displacement of the probe in 300 s** | **Conclusion** |
|---|---|---|
| | *mm* | |
| **Sample 1** | < 5 mm | gel |
| **Sample 2** | < 5 mm | gel |
| **Sample 3** | < 5 mm | gel |
| **Sample 4** | < 5 mm | gel |

### Example 8 (comparative)

Example 1 of WO 02089608 was prepared. It had the form of a paste and a total of sodium and potassium of 6.7 mmol/g water. When tested as described above, the probe moved more than 7 mm after reaching a resistance force of 10 g over a timescale of 300 s.

## Claims

1. A food concentrate in the form of a gel comprising
a) 40 to 75 wt% of water by weight of the total food concentrate;
b) Preferably at least 20 wt% NaCl by weight of the total water content of the food concentrate calculated as (weight of NaCl/(weight of NaCl+weight of total water content))*100%;
c) 5.0 to 6.0 mmol/g water of the combined amount of sodium- and potassium-ions, preferably the ratio (w/w) of sodium to potassium- ions is at least 1;
d) a binary gelling system said binary gelling system comprising
i 4 to 13 wt% of type A gelatine by weight of the total water content of the food concentrate - calculated as (weight of gelatine /(weight of gelatine+weight of total water content))*100%;
ii 9 to 35 wt% of sugar by weight of the total water content of the food concentrate said sugar selected from the group of sucrose, glucose, fructose and mixtures thereof - calculated as (weight of sugar /(weight of sugar+weight of total water content))*100%,
iii Whereby the combined amount of gelatine and sugar is at least 20wt%, by weight of the total water content of the food concentrate and
e) Preferably less than 0.1 wt% gelatinized starch by weight of the total food concentrate.

2. A food concentrate according to claim 1 wherein the food concentrate comprises at least 22 wt% NaCl by weight of the total water content of the food concentrate calculated as (weight of NaCl / (weight of NaCl+weight of total water content))*100%.

3. A food concentrate according to any one of the preceding claims comprising at least 6 wt% and at most 12 wt% of gelatine by weight of the total water content of the food concentrate.

4. A food concentrate according to any one of the preceding claims wherein the combined amount of the gelatine and the sugar is at least 24 wt% and preferably at most 35 wt% by weight of the total water content of the food concentrate.

5. A food concentrate according to any one of the preceding claims wherein the ratio (w/w) of sodium to potassium ions is at least 1, more preferably at least 5, even more preferably at least 8.

6. A food concentrate according to any one of the preceding claims comprising at least 45 wt% and at most 70 wt% of water by weight the food concentrate.

7. A food concentrate according to any one of the preceding claims in the form of a gel comprising
a) 45 to 70 wt% of water by weight of the total food concentrate;
b) at least 22 wt% NaCl by weight of the total water content of the food concentrate calculated as (weight of NaCl/(weight of NaCl+weight of total water content))*100%;
c) 5.0 to 6.0 mmol/g water of the combined amount of sodium- and potassium-ions, whereby, the ratio (w/w) of sodium to potassium- ions is at least 1 more preferably at least 5, even more preferably at least 8;
d) a binary gelling system said binary gelling system comprising
i 6 to 12 wt% of type A gelatine by weight of the total water content of the food concentrate - calculated as (weight of gelatine /(weight of gelatine+weight of total water content))*100%;
ii 9 to 30 wt% of sugar by weight of the total water content of the food concentrate said sugar selected from the group of sucrose, glucose, fructose and mixtures thereof - calculated as (weight of sugar /(weight of sugar+weight of total water content))*100%,
iii Whereby the combined amount of gelatine and sugar is at least 20wt% and at most 35wt%, by weight of the total water content of the food concentrate and
e) less than 0.1 wt% gelatinized starch by weight of the total food concentrate.

8. A process to prepare food concentrate according to any one of the preceding claims comprising the following steps:
a) Mixing all dry ingredients,
b) Admixing water to the mixture of dry ingredients,
c) Heating the mixture while stirring to completely dissolve the ingredients and to obtain a homogeneous mixture,
d) Optionally, pasteurizing said mixture,
e) Optionally, filling the mixture into a container and
f) Allowing the mixture to form a gel.

9. A process to prepare food concentrate according to claim 8 wherein prior to step a) a pre-mix is made of gelatine, at least some of the water and optionally at least some of the sugar whereby the premix is added before step c).

10. A process to prepare food concentrate according to claim 8 wherein the temperature at step c) is at least 40 °C, preferably at least 65 °C, preferably at least 70 °C and preferably at most 90 °C, preferably at most 80 °C.

11. A process to prepare the ready-to-eat food product comprising the steps of
a) providing a food concentrate according to any of the preceding claims 1 to 7,
b) dilution of the food concentrate by mixing it into a larger volume of food to result in a mixture,
c) heating the mixture resulting from step b) to result in a ready-to-eat food product.

12. A process to prepare the ready-to-eat food product according to claim 11 whereby the dilution rate in step b is at 20g/kg to 400g/kg of (food concentrate/food).

13. A process to prepare the ready-to-eat food product according to any one of claims 11 or 12 whereby the ready-to-eat food product is a bouillon.

14. Use of a concentrate according to any one of the preceding claims for preparing a ready-to-eat food product including a bouillon, soup or sauce.

## Patentansprüche

1. Lebensmittelkonzentrat in Form eines Gels, umfassend
a) 40 bis 75 Gew.-% Wasser, bezogen auf das Gewicht des gesamten Lebensmittelkonzentrats;
b) vorzugsweise mindestens 20 Gew.-% NaCl, bezogen auf das Gewicht des gesamten Wassergehalts des Lebensmittelkonzentrats, berechnet als (Gewicht vom NaCl/(Gewicht vom NaCl + Gewicht vom gesamten Wassergehalt))*100%;
c) 5,0 bis 6,0 mmol/g Wasser der kombinierten Menge von Natrium- und Kalium-Ionen, wobei das Verhältnis (Gew./Gew.) von Natrium- zu Kalium-Ionen vorzugsweise mindestens 1 beträgt;
d) ein binäres Geliersystem, wobei das binäre Geliersystem umfasst
i 4 bis 13 Gew.-% Gelatine vom Typ A, bezogen auf das Gewicht des gesamten Wassergehalts des Lebensmittelkonzentrats - berechnet als (Gewicht von Gelatine/(Gewicht von Gelatine + Gewicht vom gesamten Wassergehalt))*100%;
ii 9 bis 35 Gew.-% Zucker, bezogen auf das Gewicht des gesamten Wassergehalts des Lebensmittelkonzentrats, wobei der Zucker aus der Gruppe Sucrose, Glucose, Fructose und Mischungen davon ausgewählt ist - berechnet als (Gewicht vom Zucker/ (Gewicht vom Zucker + Gewicht vom gesamten Wassergehalt))*100%;
iii wobei die kombinierte Menge von Gelatine und Zucker mindestens 20 Gew.-%, bezogen auf das Gewicht des gesamten Wassergehalts des Lebensmittelkonzentrats, beträgt, und
e) vorzugsweise weniger als 0,1 Gew.-% gelierte Stärke, bezogen auf das Gewicht des gesamten Lebensmittelkonzentrats.

2. Lebensmittelkonzentrat nach Anspruch 1, wobei das Lebensmittelkonzentrat mindestens 22 Gew.-% NaCl, bezogen auf das Gewicht des gesamten Wassergehalts des Lebensmittelkonzentrats, berechnet als (Gewicht vom NaCl/(Gewicht vom NaCl + Gewicht vom gesamten Wassergehalt))*100%, umfasst.

3. Lebensmittelkonzentrat nach irgendeinem der vorhergehenden Ansprüche, umfassend mindestens 6 Gew.-% und höchstens 12 Gew.-% Gelatine, bezogen auf das Gewicht des gesamten Wassergehalts des Lebensmittelkonzentrats.

4. Lebensmittelkonzentrat nach irgendeinem der vorhergehenden Ansprüche, wobei die kombinierte Menge von Gelatine und Zucker mindestens 24 Gew.-% und vorzugsweise höchstens 35 Gew.-%, bezogen auf das Gewicht des gesamten Wassergehalts des Lebensmittelkonzentrats, beträgt.

5. Lebensmittelkonzentrat nach irgendeinem der vorhergehenden Ansprüche, wobei das Verhältnis (Gew./Gew.) von Natrium- zu Kalium-Ionen mindestens 1 beträgt, bevorzugter mindestens 5, sogar bevorzugter mindestens 8.

6. Lebensmittelkonzentrat nach irgendeinem der vorhergehenden Ansprüche, umfassend mindestens 45 Gew.-% und höchstens 70 Gew.-% Wasser, bezogen auf das Gewicht des Lebensmittelkonzentrats.

7. Lebensmittelkonzentrat nach irgendeinem der vorhergehenden Ansprüche in Form eines Gels, umfassend
a) 45 bis 70 Gew.-% Wasser, bezogen auf das Gewicht des gesamten Lebensmittel konzentrats;
b) mindestens 22 Gew.-% NaCl, bezogen auf das Gewicht des gesamten Wassergehalts des Lebensmittelkonzentrats, berechnet als (Gewicht vom NaCl/(Gewicht vom NaCl + Gewicht vom gesamten Wassergehalt))*100%;
c) 5,0 bis 6,0 mmol/g Wasser der kombinierten Menge von Natrium- und Kalium-Ionen, wobei das Verhältnis (Gew./Gew.) von Natrium- zu Kalium-Ionen mindestens 1, bevorzugter mindestens 5, sogar bevorzugter mindestens 8, beträgt,
d) ein binäres Geliersystem, wobei das binäre Geliersystem umfasst
i 6 bis 12 Gew.-% Gelatine vom Typ A, bezogen auf das Gewicht des gesamten Wassergehalts des Lebensmittelkonzentrats - berechnet als (Gewicht von Gelatine/(Gewicht von Gelatine + Gewicht vom gesamten Wassergehalt))*100%;
ii 9 bis 30 Gew.-% Zucker, bezogen auf das Gewicht des gesamten Wassergehalts des Lebensmittelkonzentrats, wobei der Zucker aus der Gruppe Sucrose, Glucose, Fructose und Mischungen davon ausgewählt ist - berechnet als (Gewicht vom Zucker/(Gewicht vom Zucker + Gewicht vom gesamten Wassergehalt))*100%;
iii) wobei die kombinierte Menge von Gelatine und Zucker mindestens 20 Gew.-% und höchstens 35 Gew.-%, bezogen auf das Gewicht des gesamten Wassergehalts des Lebensmittelkonzentrats, beträgt und
e) weniger als 0,1 Gew.-% gelierte Stärke, bezogen auf das Gewicht des gesamten Lebensmittelkonzentrats.

8. Verfahren zur Herstellung eines Lebensmittelkonzentrats nach irgendeinem der vorhergehenden Ansprüche, umfassend die folgenden Schritte:
a) Mischen sämtlicher trockener Bestandteile,
b) Zumischen von Wasser zu der Mischung der trockenen Bestandteile,
c) Erhitzen der Mischung unter Rühren, um die Bestandteile vollständig zu lösen und um eine homogene Mischung zu erhalten,
d) optional Pasteurisieren der Mischung,
e) optional Füllen der Mischung in einen Behälter und
f) es der Mischung ermöglichen, ein Gel zu bilden.

9. Verfahren zur Herstellung eines Lebensmittelkonzentrats nach Anspruch 8, wobei vor dem Schritt a) eine Vormischung von Gelatine, zumindest eines Teils des Wassers und optional zumindest eines Teils des Zuckers hergestellt wird, wobei die Vormischung vor dem Schritt c) hinzugegeben wird.

10. Verfahren zur Herstellung eines Lebensmittelkonzentrats nach Anspruch 8, wobei die Temperatur beim Schritt c) mindestens 40°C, vorzugsweise mindestens 65°C, vorzugsweise mindestens 70°C und vorzugsweise höchstens 90°C, vorzugsweise höchstens 80°C, beträgt.

11. Verfahren zur Herstellung des essfertigen Lebensmittelprodukts, umfassend die Schritte
a) Bereitstellen eines Lebensmittelkonzentrats nach irgendeinem der vorhergehenden Ansprüche 1 bis 7,
b) Verdünnen des Lebensmittelkonzentrats durch dessen Einmischen in ein größeres Volumen von Lebensmitteln, um zu einer Mischung zu führen,
c) Erhitzen der Mischung, die vom Schritt b) stammt, um zu einem essfertigen Lebensmittelprodukt zu führen.

12. Verfahren zur Herstellung des essfertigen Lebensmittelprodukts nach Anspruch 11, wobei die Verdünnungsgeschwindigkeit im Schritt b) bei 20 g/kg bis 400 g/kg des (Lebensmittelkonzentrats/Lebensmittels) liegt.

13. Verfahren zur Herstellung des essfertigen Lebensmittelprodukts nach irgendeinem der Ansprüche 11 oder 12, wobei das essfertige Lebensmittelprodukt eine Bouillon ist.

14. Verwendung eines Konzentrats nach irgendeinem der vorhergehenden Ansprüche zur Herstellung eines essfertigen Lebensmittelproduktes, einschließlich einer Bouillon, Suppe oder Soße.

## Revendications

1. Concentré alimentaire dans la forme d'un gel comprenant
a) de 40 à 75 % en masse d'eau en masse du concentré alimentaire total ;
b) de préférence au moins 20 % en masse de NaCl en masse de la teneur totale en eau du concentré alimentaire calculé par (masse de NaCl/(masse de NaCl + masse du contenu total d'eau)) *100 % ;
c) 5,0 à 6,0 mmol/g d'eau de la quantité combinée d'ions sodium et potassium, de préférence le rapport (masse/masse) d'ions sodium à potassium est d'au moins 1 ;
d) un système gélifiant binaire ledit système gélifiant binaire comprenant
i 4 à 13 % en masse de gélatine de type A en masse du contenu total d'eau du concentré alimentaire-calculé par (masse de gélatine/(masse de gélatine + masse du contenu total d'eau)) *100 % ;
ii 9 à 35 % en masse de sucre en masse du contenu total d'eau du concentré alimentaire ledit sucre choisi dans le groupe de saccharose, glucose, fructose et mélanges de ceux-ci-calculé par (masse de sucre/(masse de sucre + masse de contenu total d'eau)) *100 %,
iii sur quoi la quantité combinée de gélatine et de sucre est d'au moins 20 % en masse, en masse du contenu total d'eau du concentré alimentaire et
e) de préférence moins de 0,1 % en masse d'amidon gélatinisé en masse du concentré alimentaire total.

2. Concentré alimentaire selon la revendication 1, dans lequel le concentré alimentaire comprend au moins 22 % en masse de NaCl en masse du contenu total d'eau du concentré alimentaire calculé par (masse de NaCl/(masse de NaCl + masse du contenu total d'eau)) *100 %.

3. Concentré alimentaire selon l'une quelconque des revendications précédentes comprenant au moins 6 % en masse et au plus 12 % en masse de gélatine en masse du contenu total d'eau du concentré alimentaire.

4. Concentré alimentaire selon l'une quelconque des revendications précédentes, dans lequel la quantité combinée de la gélatine et du sucre est d'au moins 24 % en masse et de préférence d'au plus 35 % en masse en masse du contenu total d'eau du concentré alimentaire.

5. Concentré alimentaire selon l'une quelconque des revendications précédentes, dans lequel le rapport (masse/masse) d'ions sodium à potassium et d'au moins 1, de préférence d'au moins 5, encore mieux d'au moins 8.

6. Concentré alimentaire selon l'une quelconque des revendications précédentes comprenant au moins 45 % en masse et au plus 70 % en masse d'eau en masse du concentré alimentaire.

7. Concentré alimentaire selon l'une quelconque des revendications précédentes dans la forme d'un gel comprenant
a) 45 à 70 % en masse d'eau en masse du concentré alimentaire total ;
b) au moins 22 % en masse de NaCl en masse de la teneur totale en eau du contenu total d'eau du concentré alimentaire calculé par (masse de NaCl/(masse de NaCl + masse du contenu total d'eau)) *100 % ;
c) 5,0 à 6,0 mmol/g d'eau de la quantité combinée d'ions sodium et potassium, sur quoi, le rapport (masse/masse) d'ions sodium à potassium est d'au moins 1 encore mieux d'au moins 5, bien mieux encore d'au moins 8;
d) un système gélifiant binaire ledit système gélifiant binaire comprenant
i 6 à 12 % en masse de gélatine de type A en masse du contenu total d'eau du concentré alimentaire-calculé par (masse de gélatine/(masse de gélatine + masse du contenu total d'eau)) *100 % ;
ii 9 à 30 % en masse de sucre en masse du contenu total d'eau du concentré alimentaire ledit sucre choisi dans le groupe du saccharose, glucose, fructose et mélanges de ceux-ci calculé par (masse de sucre/(masse de sucre + masse du contenu total d'eau)) *100 %,
iii sur quoi la quantité combinée de gélatine et de sucre est d'au moins 20 % en masse et d'au plus 35 % en masse, en masse du contenu total d'eau du concentré alimentaire et
e) moins de 0,1 % en masse d'amidon gélatinisé en masse du concentré alimentaire total.

8. Procédé de préparation de concentré alimentaire selon l'une quelconque des revendications précédentes comprenant les étapes suivantes :
a) mélange de tous les ingrédients secs,
b) mélange d'eau au mélange d'ingrédients secs,
c) chauffage du mélange tout en agitant pour dissoudre complètement les ingrédients et obtenir un mélange homogène,
d) éventuellement, pasteurisation dudit mélange,
e) éventuellement, introduction du mélange dans un récipient et
f) laisser le mélange former un gel.

9. Procédé de préparation d'un concentré alimentaire selon la revendication 8, dans lequel avant l'étape a) un pré-mélange est constitué de gélatine, au moins une certaine quantité de l'eau et éventuellement au moins une certaine quantité du sucre, sur quoi le pré-mélange est ajouté avant l'étape c).

10. Procédé de préparation d'un concentré alimentaire selon la revendication 8, dans lequel la température dans l'étape c) est d'au moins 40°C, de préférence d'au moins 65°C, de préférence d'au moins 70°C et de préférence d'au plus 90°C de préférence d'au plus 80°C.

11. Procédé de préparation du produit alimentaire prêt à être consommé comprenant les étapes de
a) fourniture d'un concentré alimentaire selon l'une quelconque des revendications 1 à 7 précédentes,
b) dilution du concentré alimentaire par mélange de celui-ci dans un volume plus important d'aliment pour résulter en un mélange,
c) chauffage du mélange résultant de l'étape b) pour résulter en un produit alimentaire prêt à être consommé.

12. Procédé de préparation du produit alimentaire prêt à être consommé selon la revendication 11, sur quoi le taux de dilution dans l'étape b) est de 20 g/kg à 400 g/kg de (concentré alimentaire/aliment).

13. Procédé de préparation du produit alimentaire prêt à être consommé selon l'une quelconque des revendications 11 ou 12, sur quoi le produit alimentaire prêt à être consommé est un bouillon.

14. Utilisation d'un concentré selon l'une quelconque des revendications précédentes pour la préparation d'un produit alimentaire prêt à être consommé incluant un bouillon, une soupe ou une sauce.
